Europäisches Patentamt

European Patent Office

Office européen des brevets

(11) Numéro de publication: **0 318 366 B1**

(12) **FASCICULE DE BREVET EUROPEEN**

(45) Date de publication de fascicule du brevet: **11.11.92**  (51) Int. Cl.⁵: **B21D 55/00**, F16P 3/16

(21) Numéro de dépôt: **88402915.8**

(22) Date de dépôt: **21.11.88**

(54) **Dispositif de sécurité pour la commande d'une machine telle qu'une presse plieuse.**

(30) Priorité: **23.11.87 FR 8716198**

(43) Date de publication de la demande:
**31.05.89 Bulletin  89/22**

(45) Mention de la délivrance du brevet:
**11.11.92 Bulletin  92/46**

(84) Etats contractants désignés:
**AT BE DE ES GB IT SE**

(56) Documents cités:
**DE-A- 3 418 108**
**DE-A- 3 420 840**
**US-A- 1 684 296**
**US-A- 3 181 035**
**US-A- 3 793 533**

(73) Titulaire: **AEROSPATIALE Société Nationale
Industrielle
37, Boulevard de Montmorency
F-75781 Paris Cédex 16(FR)**

(72) Inventeur: **Ameline Pierre
7 rue Lampezard
F-77230 Moussy le Neuf(FR)**
Inventeur: **Magnier, Michel
1 Allée Delamarre
F-93190 Livry-Gargan(FR)**

(74) Mandataire: **Mongrédien, André et al
c/o BREVATOME 25, rue de Ponthieu
F-75008 Paris(FR)**

Rank Xerox (UK) Business Services

## Description

L'invention concerne un dispositif de sécurité permettant de commander une machine telle qu'une presse plieuse, dans laquelle un organe presseur est appliqué avec une pression importante contre une matrice montée sur une table fixe.

Le mot "matrice" désigne ici indifféremment le sommier déformable d'une presse plieuse et la matrice inférieure rigide d'une presse d'emboutissage. Dans le premier cas, l'organe presseur est un poinçon de formage alors que, dans le deuxième cas, l'organe presseur est une matrice supérieure rigide.

Dans les machines de ce type, et notamment dans le cas des presses plieuses au moyen desquelles plusieurs plis peuvent être réalisés successivement sur une même pièce, l'emplacement des plis à former est tracé au préalable sur la pièce et le positionnement de celle-ci se fait manuellement. L'opérateur maintient la pièce par ses extrémités, tout en commandant la descente de l'organe presseur à l'aide d'une pédale. Il ne lâche la pièce que lorsque l'organe presseur appuie suffisamment pour la maintenir en place sur la matrice déformable. La montée en pression est pratiquement immédiate et il n'y a pas de transition entre la descente à vide de l'organe presseur et l'application de la pression sur la pièce par cet organe.

Certaines presses plieuses existantes donnent la possibilité à un ou deux opérateurs de travailler sur la machine. Le choix est fonction du travail à exécuter et notamment des dimensions de la pièce. Lorsque ce choix a été fait, on sélectionne sur le poste de commande de la machine l'un ou l'autre des modes opératoires correspondants. Dans le cas où le mode opératoire correspondant à deux opérateurs est sélectionné, l'arrêt impératif de la descente de l'organe presseur se fait dès que l'un des opérateurs relâche le pied de sa pédale de commande.

Un premier inconvénient de ces machines existantes résulte de la montée en pression de la machine, qui intervient dès que l'organe presseur entre en contact avec la pièce, sans aucun temps d'arrêt. Par conséquent, si l'opérateur laisse les doigts dans la zone de risque de pincement entre l'organe presseur et la pièce, il n'a pas le temps de retirer sa main et risque un accident.

Par ailleurs, si deux opérateurs travaillent sur la machine alors que le mode opératoire sélectionné sur le poste de commande correspond à un seul opérateur, le second opérateur se trouve hors sécurité. En effet, il ne peut en aucun cas neutraliser la descente de l'organe presseur en relâchant sa pédale, car le fonctionnement de celle-ci n'est alors pas pris en compte par la machine.

Le document US-A-1 684 296, qui est considéré comme l'état de l'art le plus proche, propose d'équiper une presse d'un sommier suspendu, auquel est associé un contacteur qui s'ouvre automatiquement, pour interrompre la descente de l'organe presseur, si un corps étranger est placé entre ce dernier et le sommier suspendu. L'organe presseur remonte alors sous l'effet d'un ressort de rappel. En revanche, dès que l'organe presseur arrive au point bas, un second contacteur prend le relai et assure la montée en pression. Il n'y a donc pas de temps mort, ni de possibilité pour l'opérateur de maintenir l'organe presseur sur le sommier avec une faible pression.

L'invention a précisément pour objet un dispositif de sécurité permettant de commander une machine telle qu'une presse, en supprimant les inconvénients qui viennent d'être mentionnés, ce dispositif étant conçu pour que la montée en pression de la machine ne puisse avoir lieu alors que les mains d'un opérateur sont encore dans la zone dangereuse entre la pièce et l'organe presseur, et pour qu'une erreur de sélection du mode opératoire n'entraîne pas de risque d'accident.

A cet effet, il est proposé un dispositif de sécurité, pour la commande par au moins un opérateur d'une machine, telle qu'une presse plieuse, comportant une matrice suspendue élastiquement au-dessus d'une table fixe par des moyens élastiques, un organe presseur, des moyens d'application de pression permettant de déplacer l'organe presseur vers la matrice, et un premier organe d'actionnement assurant la commande des moyens d'application de pression, en libérant au moins une main de l'opérateur,

lesdits moyens élastiques par lesquels la matrice est suspendue au-dessus de la table fixe équilibrent le poids de la matrice en la maintenant à une distance donnée de la table fixe, étant dimensionnés de façon à permettre un déplacement de la matrice sur la distance donnée lorsqu'un effort de faible importance est appliqué sur la matrice le dit effort étant suffisant pour maintenir en place la pièce à travailler, tout en étant insuffisant pour provoquer un accident;

caractérisé en ce que aux moyens élastiques sont associés des moyens de détection d'un déplacement de la matrice vers la table fixe sur une distance inférieure à ladite distance donnée, l'actionnement de ces moyens de détection consécutif à la mise en œuvre du premier organe d'actionnement arrêtant instantanément l'organe presseur dans une position d'attente dans laquelle ce dernier maintient en place une pièce sur la matrice ;

- un deuxième organe d'actionnement dont la mise en œuvre, ajoutée à celle du premier organe d'actionnement de façon à nécessiter les deux mains de l'opérateur, assure la commande des moyens d'application de pression à partir de ladite position d'attente, après que les moyens de détection aient été actionnés.

Grâce à un tel dispositif, la descente de l'organe presseur est stoppée automatiquement dès que cet organe exerce sur la pièce une pression suffisante pour empêcher tout déplacement de celle-ci. Cette pression, par exemple voisine de 500 g/cm², est cependant insuffisante pour provoquer un accident, si l'opérateur n'a pas eu le temps de retirer ses doigts avant que l'organe presseur ne vienne s'appliquer sur la pièce. Pour que la montée en pression puisse avoir lieu, l'opérateur doit nécessairement actionner simultanément deux organes d'actionnement nécessitant la présence de ses deux mains, de sorte que tout risque d'accident est supprimé.

Dans un mode de réalisation préféré de l'invention, la matrice est montée sur la table fixe de manière à pouvoir coulisser verticalement entre des guides qui l'empêchent de se déplacer latéralement et longitudinalement, les moyens élastiques comprenant plusieurs ressorts, un moyen de détection étant associé à chacun de ces ressorts, de telle sorte que l'actionnement de l'un au moins de ces moyens consécutif à la mise en œuvre du premier organe d'actionnement arrête instantanément l'organe presseur dans ladite position d'attente.

Les moyens de détection comprennent alors des contacts portés par la table fixe, chaque contact commandant un commutateur qui occupe normalement un premier état dans lequel une borne d'entrée est connectée à une première borne de sortie, les contacts étant répartis de telle sorte que l'un au moins des commutateurs occupe un deuxième état dans lequel la borne d'entrée est connectée à une deuxième borne de sortie dès que la matrice s'est déplacée en direction de la table fixe d'une valeur égale à D, avant toute venue en contact de la matrice sur la table fixe, et en ce que le premier et le deuxième organes d'actionnement commandent respectivement la fermeture d'un premier et d'un deuxième interrupteurs, le premier interrupteur, les commutateurs et un système de commande électrique des moyens d'application de pression étant connectés en série sur les bornes d'entrée et les premières bornes de sortie des commutateurs, le deuxième interrupteur étant connecté entre les deuxièmes bornes de sortie de chacun des commutateurs et la première borne de sortie d'un dernier des commutateurs montés en série, de façon à shunter ces derniers lors de sa fermeture, dès que l'un des commutateurs occupe le deuxième état.

De préférence, le dispositif de sécurité comprend alors quatre ressorts de compression disposés aux coins d'un rectangle formé par la matrice et quatre contacts disposés à proximité des quatre ressorts.

Dans un mode de réalisation de l'invention, les ressorts sont des ressorts de compression logés dans des douilles fixées sur la table fixe et dont les extrémités inférieure et supérieure sont respectivement en appui sur une butée réglable en hauteur et sur un poussoir sur lequel repose la matrice. Le réglage de la butée permet d'équilibrer le poids de la matrice et de donner à la distance séparant cette dernière de la table fixe la valeur souhaitée, lors d'un remplacement de la matrice.

Afin d'éviter des vibrations excessives de la matrice lors de la remontée de l'organe presseur, les douilles peuvent être remplies d'un fluide hydraulique, des gorges étant formées sur les poussoirs de façon à laminer le fluide lors des déplacements des douilles et à amortir ces mouvements.

Enfin, pour éviter que des objets puissent être glissés entre la matrice et la table fixe, ce qui aurait pour effet d'empêcher la descente de la matrice à la fin de la première phase de fonctionnement du dispositif, un carénage peut avantageusement être prévu autour de la matrice de la table fixe.

Un mode de réalisation préféré de l'invention va maintenant être décrit, à titre d'exemple nullement limitatif, en se référant aux dessins annexés dans lesquels :

- la figure 1 est une vue en perspective représentant schématiquement une partie d'une presse plieuse équipée d'un dispositif de sécurité réalisé conformément à l'invention ;
- la figure 2 est une vue en coupe transversale représentant le supportage de la matrice par la table fixe dans la machine de la figure 1 ; et
- la figure 3 est une vue de face, en coupe partielle, montrant le montage de l'une des extrémités de la matrice sur la table fixe de la machine.

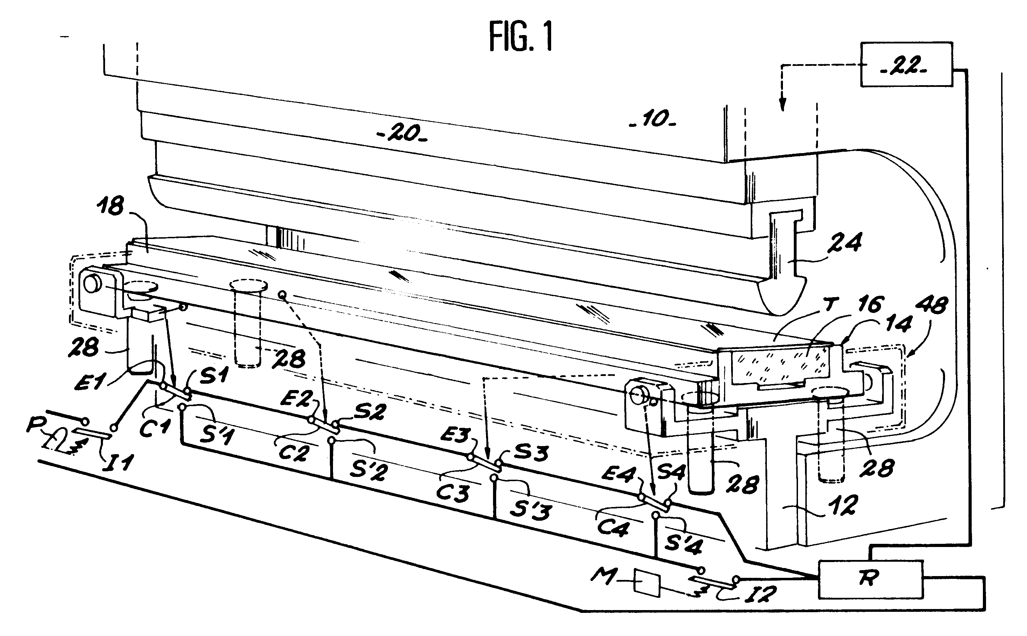

La machine qui est représentée schématiquement et de façon partielle sur la figure 1 est une presse plieuse dont la structure générale est classique. Cette presse comprend principalement un bâti 10 en col de cygne, dont la partie basse supporte une table horizontale fixe 12 sur laquelle repose une matrice 14. Cette matrice 14 est constituée ici d'un sommier 16 en un matériau déformable, maintenu dans un conteneur métallique 18, par exemple en acier.

Dans sa partie haute, le bâti 10 de la machine supporte un coulisseau 20 situé verticalement au-dessus du sommier 16. Ce coulisseau 20 peut se déplacer verticalement entre une position haute et une position basse, sous l'action de moyens d'application de pression (non représentés). Dans le cas d'une presse hydraulique, ces moyens d'application de pression sont constitués par un dispositif cylindre-piston actionné par de l'huile sous pression dont l'envoi sur l'une des faces du piston est contrôlé par un distributeur 22 commandé électriquement à partir d'un relais R.

A son extrémité inférieure, le coulisseau 20 supporte un organe presseur constitué par un poinçon 24 disposé dans le plan vertical médian du sommier 16 et s'étendant horizontalement sur toute la longueur de ce dernier.

Lorsque le coulisseau 20 est en position haute, le poinçon 24 est situé au-dessus de la face supérieure du sommier 16. Au contraire, la position basse du coulisseau correspond à un enfoncement prédéterminé du poinçon 24 dans le sommier 16.

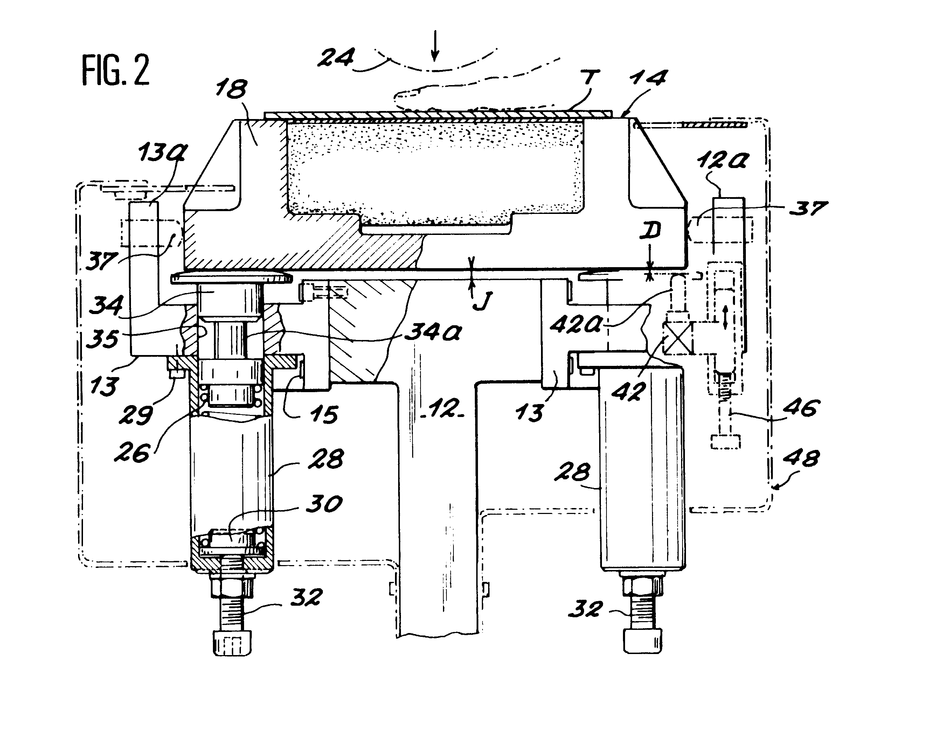

Conformément à l'invention, le conteneur 18 n'est pas fixé directement sur la table 12 de la façon habituelle mais relié à celle-ci par des moyens de suspension qui vont maintenant être décrits plus en détail en se référant à la figure 2.

Dans le mode de réalisation représenté, ces moyens de suspension comprennent quatre ressorts de compression hélicoïdaux 26, d'axes verticaux, qui sont disposés aux quatre coins du rectangle formés en vue de dessus par le conteneur 18. Ce dernier repose ainsi indirectement sur la table 12 au travers de ces ressorts 26, de telle sorte qu'il existe normalement entre la face inférieure plane du conteneur 18 et la face supérieure plane de la table fixe 12 un jeu prédéterminé J. Ce jeu J est par exemple voisin de 5 mm.

De façon plus précise, chacun des ressorts 26 est logé dans une douille 28 fixée par exemple à l'aide de vis 29 sur la face inférieure d'une pièce 13 fixée sur le côté de la table 12 par des vis 15. L'extrémité inférieure du ressort 26 est en appui sur une butée réglable 30 placée dans le fond de la douille 28 et qui peut être déplacée verticalement à l'intérieur de celle-ci au moyen d'une vis 32 vissée dans le fond de la douille. A son extrémité supérieure, chacun des ressorts 26 prend appui sur un poussoir 34 qui traverse un trou 35 formé dans la pièce 13 et dont le diamètre est le même que le diamètre inférieur de la douille 28. A son extrémité supérieure située au-dessus de la face supérieure plane de la table 12, le poussoir 34 comporte une partie de plus grand diamètre sur laquelle repose le conteneur 18 dans lequel est monté le sommier 16.

Grâce aux vis de réglage 32, il est possible de donner au jeu J séparant le conteneur 18 de la table 12 la valeur souhaitée, quel que soit le poids de l'ensemble formé par le conteneur 18 et par le sommier 16. En particulier, les vis 32 permettent de régler le jeu J lors d'un changement de la matrice 14.

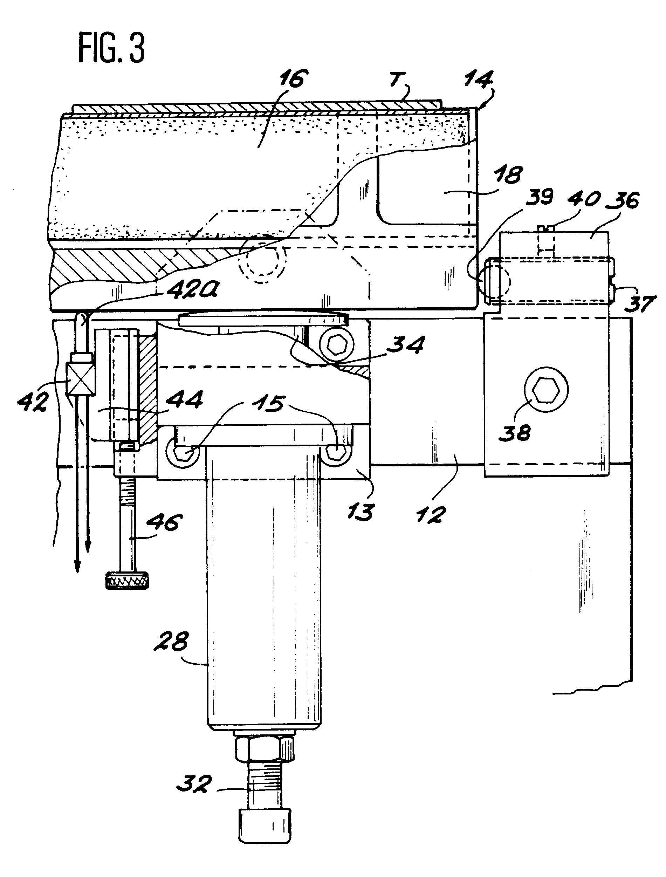

Afin d'assurer un positionnement précis de cet ensemble formé par le conteneur 18 et le sommier 16 en-dessous du poinçon 24, les pièces 13 comportent des bras 13a recourbés vers le haut en vis-à-vis des faces latérales du conteneur 18. De même, la table 12 supporte en vis-à-vis des faces d'extrémité du conteneur 18 des glissières 36 immobilisées par des vis 38 (figure 3). Ces bras 13a et ces glissières 36 supportent des guides réglables 37 dont l'un est représenté plus en détail sur la figure 3. Chacun de ces guides 37 est formé par une vis d'axe horizontal vissée dans le bras 13a ou dans la glissière 36 correspondant et dont l'extrémité porte une bille 39 venant en appui sur la face correspondante du conteneur 18. Une vis de blocage 40 permet d'immobiliser la vis 37 dans la position souhaitée.

De préférence et afin de réduire les vibrations de l'ensemble formé par le conteneur 18 et le sommier 16 lors de la remontée du poinçon 24, les douilles 28 sont remplies d'un fluide hydraulique tel que de l'huile et chacun des poussoirs 34 comporte une gorge 34a. Lors du relâchement de la pression de travail, un amortissement des mouvements linéaires des poussoirs 34 dans les douilles 8 est ainsi obtenu par laminage de l'huile entre le diamètre extérieur des poussoirs faisant office de pistons et l'alésage des douilles.

Conformément à l'invention, le dispositif de sécurité comprend, en plus des moyens de suspension constitués par les ressorts 26, des moyens permettant de détecter un déplacement de l'ensemble conteneur 18 -sommier 16, bien avant que cet ensemble ne vienne au contact de la table 12.

Dans le mode de réalisation représenté, ces moyens de détection comprennent quatre microcontacts 42 supportés par la table fixe 12 et situés de préférence à proximité de chacun des poussoirs 34.

Comme l'illustre notamment la figure 3, chacun des microcontacts 42 est porté par un support 44 monté sur la pièce 13 correspondante, de façon à pouvoir se déplacer verticalement par rapport à celle-ci. Une vis de réglage 46 permet d'effectuer un positionnement vertical précis de chacun des microcontacts 42 sur cette pièce 13. Ce réglage est fait de telle sorte que l'extrémité de la tige verticale 42a de chacun des microcontacts se trouve normalement à une très faible distance D (figure 2) de la face inférieure horizontale du conteneur 18. Dans la pratique, cette distance D est telle qu'une changement d'état du microcontact s'effectue pour une descente de l'ensemble conteneur 18 -sommier 16 d'environ 0,3 mm. La détection de la venue en contact du poinçon 24 sur la pièce P (figure 2) placé sur l'ensemble conteneur 18 - sommier 16 intervient donc bien avant que le conteneur ne vienne en appui sur la table fixe 12.

Sur la figure 1, on a représenté schématiquement le circuit de commande électrique de la machine équipée du dispositif de sécurité selon l'invention.

Chacun des quatre microcontacts 42 commande un commutateur désigné par les références C1 à C4 sur la figure 1. Lorsque la face inférieure du conteneur 18 n'est pas en contact avec l'extrémité supérieure des tiges 42a de ces commutateurs, ces derniers occupent un premier état dans lequel leur borne d'entrée E1 à E4 est connectée électriquement à une première borne de sortie S1 à S4.

La venue en contact de la face inférieure plane du conteneur 18 avec la tige 42a de l'un quelconque de ces commutateurs a pour effet de le faire passer dans un deuxième état dans lequel sa borne d'entrée E1 à E4 est connectée électriquement à une deuxième borne de sortie S'1 à S'4.

Comme l'illustre la figure 1, les commutateurs C1 à C4 associés à chacun des microcontacts 42 sont montés en série, de telle sorte que la première borne de sortie S1, S2, S3 est connectée électriquement à la borne d'entrée E2, E3, E4 du commutateur suivant. Ces commutateurs C1 à C4 ainsi montés en série sont eux-mêmes montés en série avec un premier interrupteur I1 et avec un relais R commandant l'électrovanne 22 assurant la descente du coulisseau 20 portant le poinçon 24.

Dans le mode de réalisation décrit, l'interrupteur I1, normalement ouvert, est commandé par une pédale P.

Par ailleurs, chacune des bornes de sortie S'1 à S'4 des commutateurs C1 à C4 montés en série est connectée électriquement à la borne de sortie S4 du dernier commutateur C4 par l'intermédiaire d'un deuxième interrupteur I2, normalement ouvert. Cet interrupteur I2 est commandé par un poste de commande double M à actions manuelles simultanées. La mise en oeuvre de ce poste de commande nécessite les deux mains de l'opérateur.

Le circuit électrique qui vient d'être décrit est alimenté par une source d'alimentation électrique (non représentée).

Lorsque la machine est à l'arrêt, l'ensemble constitué par le conteneur 18 et le sommier 16 est suspendu au-dessus de la table fixe 12 par les ressorts 26. Aucun des microcontacts 42 n'est actionné, de sorte que les commutateurs C1 à C4 occupent tous leur premier état dans lequel la borne d'entrée E1 à E4 est connectée électriquement à la borne de sortie S1 à S4. Les interrupteurs I1 et I2 sont ouverts.

Lorsqu'un opérateur désire plier une pièce P (figure 2), il place celle-ci sur le sommier 16 et la positionne avec les mains. Tout en continuant de maintenir la pièce manuellement, l'opérateur commande la descente du poinçon 24 en appuyant sur la pédale P associée à l'interrupteur I1. La fermeture de cet interrupteur ferme le circuit électrique d'alimentation du relais R, ce qui a pour effet de commander la descente du poinçon au travers du distributeur 22.

Dès que le poinçon 24 entre en contact avec la pièce, un léger déplacement vers le bas du sommier 16 et du conteneur 18 se produit. L'une au moins des tiges 42a des microcontacts 42 vient alors en contact avec la face inférieure du conteneur, de sorte que le commutateur C1 à C4 correspondant change d'état. Le circuit d'alimentation du relais R est instantanément ouvert et la descente du poinçon 24 est immédiatement stoppée.

En supposant que l'opérateur n'ait pas eu le temps de retirer ses doigts de la zone dangereuse avant que le poinçon 24 ne vienne en appui sur la pièce, la pression exercée par le poinçon est suffisamment faible pour que tout risque d'accident grave soit évité. En effet, l'ensemble sommier 16 - conteneur 18 reste alors suspendu au-dessus de la table fixe 12 et la pression appliquée sur la pièce n'excède pas environ 500 g/cm². Cette pression est cependant suffisante pour maintenir en place la pièce T (figure 2) sur le sommier 16 dans la position souhaitée.

L'opérateur peut alors retirer ses mains pour déclencher la montée en pression de travail de la machine en actionnant à l'aide des deux mains le poste de commande M associé à l'interrupteur I2, tout en maintenant enfoncée la pédale de commande P de l'interrupteur I1. Le circuit d'alimentation du relais R est alors à nouveau fermé et la pression de travail est obtenue sans aucun risque d'accident pour l'opérateur.

Bien entendu, pour que le dispositif de sécurité qui vient d'être décrit fonctionne de façon satisfaisante, la zone d'environ 5 mm entre le conteneur 18 et la table 12 doit être constamment dégagée, afin que la course d'amortissement assurée par les ressorts 26 soit libre. En effet, la présence d'objets dans cette zone pourrait gêner la descente du conteneur sur la table et rendre inefficace le dispositif de sécurité.

Pour éviter ce risque, un système de détection ou de protection est de préférence prévu.

Dans le mode de réalisation représenté, un carénage 48 entoure la table fixe 12 et le conteneur 18, comme le montre bien la figure 2. Les carters avant et arrière de ce carénage 48 sont positionnés à des hauteurs différentes afin de garder l'efficacité du dispositif de sécurité même si une pièce est posée en travers sur le conteneur.

Il est à noter que le dispositif de sécurité selon l'invention peut être installé sur des machines existantes sans conduire à des modifications très importantes de ces machines.

De plus, les seules pièces d'usure de ce dispositif sont les ressorts 26 et les microcontacts 42, et la défaillance éventuelle de l'un d'entre eux est sans effet sur le fonctionnement du dispositif.

Ainsi, dans le cas d'un tassement ou d'une rupture de l'un des ressorts 26, l'ensemble formé par le conteneur 18 et par le sommier 16 descend et entre en contact avec la tige du microcontact le plus proche du ressort défaillant. La machine s'arrête alors instantanément et ne peut en aucun cas être commandée par un simple actionnement de l'interrupteur I1 à l'aide de la pédale P.

Dans le cas où l'un des microcontacts serait défaillant, un deuxième microcontact entrerait immédiatement en action et arrêterait également la descente du poinçon sans que l'opérateur soit en danger.

De préférence, quatre lampes témoins sont montées sur le pupitre de commande pour contrôler le fonctionnement des quatre microcontacts à chaque manoeuvre de la presse.

Par ailleurs, si deux opérateurs travaillent sur la machine alors que le mode opératoire affiché sur celle-ci correspond à un seul opérateur, celui qui commande la machine se rend compte que le poinçon s'est arrêté sur les doigts de l'autre opérateur et non sur la pièce, qui n'est pas alors maintenue pincée au tracé. De plus, l'opérateur ayant les doigts pincés a le temps de dégager sa main avant que l'autre opérateur actionne sa commande bimanuelle, étant donné qu'il s'écoule nécessairement un certain temps entre les deux phases d'actionnement de la machine.

Enfin, l'arrêt du poinçon au moment du pincement de la pièce, puis la descente de l'ensemble conteneur-sommier peuvent être facilement observés par l'opérateur, ce qui permet à celui-ci de contrôler que le dispositif de sécurité fonctionne de façon satisfaisante.

Bien entendu, l'invention n'est pas limitée au mode de réalisation qui vient d'être décrit à titre d'exemple, mais en couvre toutes les variantes.

Ainsi, les ressorts 26 assurant la suspension de la matrice 14 au-dessus de la table fixe peuvent être remplacés par tout dispositif de suspension équivalent tel que des vérins oléo-pneumatiques.

Par ailleurs, la détection du pincement de la pièce par le poinçon commandant l'arrêt de la première phase de la mise en oeuvre de la machine peut ne pas être faite à l'aide de microcontacts mais, par exemple, par des systèmes équivalents tels que des dispositifs de détection optique dont le changement d'état est commandé par la présence du conteneur sur le chemin optique de ces dispositifs de détection.

L'implantation et le nombre des ressorts 22 et des microcontacts 42 peuvent aussi être différents de ceux qui ont été décrits.

La pédale P peut en outre être remplacée par un organe d'actionnement que l'opérateur peut manoeuvrer d'un seule main. Dans ce cas, le poste de commande M est actionné par l'autre main de l'opérateur.

Enfin, on a déjà observé que le dispositif de sécurité selon l'invention n'est pas limité à la commande d'une presse plieuse mais peut être utilisée sur toutes les machines comportant un organe presseur appliquant une pièce sur une matrice montée sur une table fixe, et dans lesquelles un maintien manuel de la pièce peut être nécessaire.

**Revendications**

1. Dispositif de sécurité, pour la commande par au moins un opérateur d'une machine, telle qu'une presse plieuse, comportant une matrice (14) suspendue élastiquement au-dessus d'une table fixe (12) par des moyens élastiques (26), un organe presseur (24), des moyens d'application de pression (22) permettant de déplacer l'organe presseur vers la matrice, et un premier organe d'actionnement (P) assurant la commande des moyens d'application de pression, en libérant au moins une main de l'opérateur,

lesdits moyens élastiques (26) par lesquels la matrice (14) est suspendue au-dessus de la table fixe (12) équilibrent le poids de la matrice en la maintenant à une distance donnée (J) de la table fixe (12), étant dimensionnés de façon à permettre un déplacement de la matrice sur la distance (J) lorsqu'un effort de faible importance est appliqué sur la matrice le dit effort étant suffisant pour maintenir en place la pièce à travailler, tout en étant insuffisant pour provoquer un accident;

caractérisé en ce que :

- aux moyens élastiques (26) sont associés des moyens (42) de détection d'un déplacement de la matrice (14) vers la table fixe (12) sur une distance (D) inférieure à ladite distance donnée (J), l'actionnement de ces moyens de détection (42) consécutif à la mise en oeuvre du premier organe d'actionnement (P) arrêtant instantanément l'organe presseur (24) dans une position d'attente dans laquelle ce dernier maintient en place une pièce sur la matrice ;

- un deuxième organe d'actionnement (M) dont la mise en oeuvre, ajoutée à celle du premier organe d'actionnement (P) de façon à nécessiter les deux mains de l'opérateur, assure la commande des moyens d'application de pression (22) à partir de ladite position d'attente, après que les moyens de détection (42) aient été actionnés.

2. Dispositif selon la revendication 1, caractérisé en ce que la matrice (14) est montée sur la table fixe (12) de manière à pouvoir coulisser verticalement entre des guides (37, 39) qui l'empêchent de se déplacer latéralement et longitudinalement, les moyens élastiques comprenant plusieurs ressorts (26), un moyen de détection (42) étant associé à chacun de ces ressorts, de telle sorte que l'actionnement de l'un au moins de ces moyens consécutif à la mise en oeuvre du premier organe d'actionnement (P) arrête instantanément l'organe presseur dans ladite position d'attente.

3. Dispositif selon la revendication 2, caractérisé en ce que les moyens de détection comprennent des contacts (42) portés par la table fixe (12), chaque contact commandant un commutateur ($C_1$ à $C_4$) qui occupe normalement un premier état dans lequel une borne d'entrée ($E_1$ à $E_4$) est connectée à une première borne de sortie ($S_1$ à $S_4$), les contacts étant répartis de telle sorte que l'un au moins des commutateurs ($C_1$ à $C_4$) occupe un deuxième état dans lequel la borne d'entrée ($E_1$ à $E_4$) est connectée à une deuxième borne de sortie ($S'_1$ à $S'_4$) dès que la matrice s'est déplacée en direction de la table fixe d'une valeur égale à (D), avant toute venue en contact de la matrice (14) sur la table fixe (12), et en ce que le premier et le deuxième organes d'actionnement (P, M) commandent respectivement la fermeture d'un premier et d'un deuxième interrupteurs ($I_1$, $I_2$), le premier interrupteur ($I_1$), les commutateurs ($C_1$ à $C_4$) et un système de commande électrique (R) des moyens d'application de pression (22) étant connectés en série sur les bornes d'entrée ($E_1$ à $E_4$) et les premières bornes de sortie ($S_1$ à $S_4$) des commutateurs, le deuxième interrupteur ($I_2$) étant connecté entre les deuxièmes bornes de sortie ($S'_1$ à $S'_4$) de chacun des commutateurs et la première borne de sortie ($S_4$) d'un dernier des commutateurs montés en série, de façon à shunter ces derniers lors de sa fermeture, dès que l'un des commutateurs occupe le deuxième état.

4. Dispositif selon la revendication 3, caractérisé par le fait qu'il comprend quatre ressorts de compression (26) disposés aux coins d'un rectangle formé par la matrice (14) et qu'il comprend quatre contacts (42) disposés à proximité des quatre ressorts.

5. Dispositif selon l'une quelconque des revendications 2 à 4, caractérisé par le fait que les ressorts (26) sont des ressorts de compression logés dans des douilles (28) fixées sur la table fixe (12) et dont les extrémités inférieure et supérieure sont respectivement en appui sur une butée (30) réglable en hauteur et sur un poussoir (34) sur lequel repose la matrice (14).

6. Dispositif selon la revendication 5, caractérisé par le fait que les douilles (28) sont remplies d'un fluide hydraulique, des gorges (34a) étant formées sur les poussoirs (34) pour constituer un amortisseur des déplacements des poussoirs par laminage du fluide entre le diamètre extérieur des poussoirs et l'alésage des douilles.

7. Dispositif selon l'une quelconque des revendications 1 à 6, caractérisé par le fait qu'un carénage (48) entoure la matrice (14) et la table fixe (12).

8. Dispositif selon l'une quelconque des revendications 1 à 7, caractérisé par le fait que le premier organe d'actionnement comprend au moins un poste de commande (M) à actions manuelles simultanées des deux mains de chaque opérateur.

## Claims

1. Safety device, for the control by at least one operator of a machine, such as a bending press, comprising a die (14) suspended resiliently above a fixed bed (12) by resilient means (26), a presser member (24), and pressure application means (22) serving to displace the presser member towards the die, and a first actuation member (P) ensuring the control of the pressure application means, by freeing at least one hand of the operator, the said resilient means (26) whereby the die (14) is suspended above the fixed bed (12) balance the weight of the die by maintaining it at a given distance (J) from the fixed bed (12), being dimensioned so as to permit a displacement of the die over the distance (J) when a weak force is applied on the die, the said force being sufficient to hold in place the piece to be worked, while being insufficient to cause an accident;
characterised in that:
- with the resilient means (26) are associated means (42) for detecting a displacement of the die (14) towards the fixed bed (12) over a distance (D) smaller than the said given distance (J), the actuation of these detection means (42) as a result of the operation of the first actuation member (P) stopping the presser member (24) instantaneously in a standby position in which the latter holds a piece in place on the die;

- a second actuation member (M) whose operation, added to that of the first actuation member (P) so as to necessitate both of the operator's hands, ensures the control of the pressure application means (22) from the said stand-by position, after the detection means (42) have been actuated.

2. Device according to Claim 1, characterised in that the die (14) is mounted on the fixed bed (12) so as to be capable of sliding vertically between guides (37, 39) which prevent it from moving laterally and longitudinally, the resilient means comprising several springs (26), a detection means (42) being associated with each of these springs, so that the actuation of at least one of these means as a result of the operation of the first actuation member (P) instantaneously stops the presser member in the said stand-by position.

3. Device according to Claim 2, characterised in that the detection means comprise contacts (42) borne by the fixed bed (12), each contact controlling a changeover switch ($C_1$ to $C_4$) which normally occupies a first state in which an input terminal ($E_1$ to $E_4$) is connected to a first output terminal ($S_1$ to $S_4$), the contacts being distributed so that at least one of the changeover switches ($C_1$ to $C_4$) occupies a second state in which the input terminal ($E_1$ to $E_4$) is connected to a second output terminal ($S'_1$ to $S'_4$) as soon as the die has moved in the direction of the fixed bed by a value equal to (D), before making any contact with the die (14) on the fixed bed (12), and in that the first and second actuation members (P, M) control the closure of a first and second switch ($I_1$, $I_2$), respectively, the first switch ($I_1$), the changeover switches ($C_1$ to $C_4$) and an electrical control system (R) of the pressure application means (22) being connected in series onto the input terminals ($E_1$ to $E_4$) and the first output terminals ($S_1$ to $S_4$) of the changeover switches, the second switch ($I_2$) being connected between the second output terminals ($S'_1$ to $S'_4$) of each of the changeover switches and the first output terminal ($S_4$) of a last of the changeover switches mounted in series, so as to shunt the latter changeover switches when it closes, as soon as one of the changeover switches occupies the second state.

4. Device according to Claim 3, characterised in that it comprises four compression springs (26) disposed at the corners of a rectangle formed by the die (14) and in that it comprises four contacts (42) disposed close to the four springs.

5. Device according to any of Claims 2 to 4, characterised in that the springs (26) are compression springs housed in sockets (28) mounted on the fixed bed (12) and whose lower and upper ends bear respectively against a stop (30) adjustable in height and against a push rod (34) on which rests the die (14).

6. Device according to Claim 5, characterised in that the sockets (28) are filled with a hydraulic fluid, grooves (34a) being formed on the push rods (34) so as to constitute a damper of the movements of the push rods by throttling the fluid between the outer diameter of the push rods and the bore of the sockets.

7. Device according to any of Claims 1 to 6, characterised in that a fairing (48) surrounds the die (14) and the fixed bed (12).

8. Device according to any of Claims 1 to 7, characterised in that the first actuation member comprises at least one control station (M) with simultaneous manual actions by both hands of each operator.

**Patentansprüche**

1. Sicherheitsvorrichtung, für die Betätigung durch wenigstens eine Bedienungsperson einer Maschine, wie einer Biegepresse, welche eine Matrize (14), die oberhalb eines feststehenden Maschinentischs (12) mit elastischen Mitteln (26) aufgehängt ist, ein Preßorgan (24), Mittel (22) zur Druckaufbringung, die es erlauben, das Preßorgan in Richtung Matrize zu bewegen, und ein erstes Betätigungselement (P) aufweist, welches für die Steuerung der Mittel zur Druckaufbringung sorgt, wobei es zumindest eine Hand der Bedienungsperson freimacht,

wobei die elastischen Mittel (26), mit welchen die Matrize (14) oberhalb des feststehenden Maschinentischs (12) aufgehängt ist, das Gewicht der Matrize ausgleichen und sie in einer gegebenen Entfernung (J) vom feststehenden Maschinentisch (12) halten, und wobei sie so dimensioniert sind, daß sie eine Versetzung der Matrize um den Abstand (J) erlauben, sobald ein geringer Druck auf die Matrize aufgebracht wird, der genügt, das zu bearbeitende Teil an seinem Platz zu halten, jedoch nicht genügt, einen Unfall hervorzurufen,

**dadurch gekennzeichnet,** daß

- den elastischen Mitteln (26) Mittel (42) zum Feststellen einer Versetzung der Matrize (14) in Richtung des feststehenden Maschinentisches (12) um eine Entfernung (D) zugeordnet sind, die kleiner ist als der vorgenannte gegebene Abstand (J), die Aktivierung der Feststellmittel (42) nachfolgend dem Betätigen des ersten Betätigungselementes (P) sofort das Preßorgan (24) in einer Warteposition anhält, in welcher das letztere das Werkstück auf der Matrize festhält, und

- ein zweites Betätigungselement (M), dessen Betätigung so an die des ersten Betätigungselementes (P) angebunden ist, daß sie die zwei Hände der Bedienungsperson verlangt, für die Steuerung der Druckaufbringungsmittel (22), ausgehend von der genannten Warteposition, sorgt, nachdem die Feststellmittel (42) betätigt wurden.

2. Vorrichtung gemäß Anspruch 1, **dadurch gekennzeichnet,** daß die Matrize (14) auf dem feststehenden Maschinentisch (12) so befestigt ist, daß sie vertikal zwischen zwei Führungen (37, 39) gleiten kann, die sie an seitlichen und längsgerichteten Bewegungen hindern, daß die elastischen Mittel mehrere Federn (26) umfassen, wobei jeder Feder ein Feststellelement (42) zugeordnet ist, so daß die Aktivierung zumindest eines Mittels, welche der Inbetriebsetzung des ersten Antriebselementes (P) folgt, sofort das Preßorgan in der genannten Warteposition anhält.

3. Vorrichtung gemäß Anspruch 2, **dadurch gekennzeichnet,** daß die Feststellelemente Kontakte (42) haben, welche auf dem feststehenden Maschinentisch (12) angebracht sind, wobei jeder Kontakt einen Schalter (C1 bis C4) steuert, der normalerweise eine erste Position einnimmt, in welcher eine Eingangsklemme (E1 bis E4) an eine erste Ausgangsklemme (S1 bis S4) angeschlossen ist, und die Kontakte so verteilt sind, daß mindestens einer der Schalter (C1 bis C4) eine zweite Position einnimmt, in der die Eingangsklemme (E1 bis E4) an eine zweite Ausgangsklemme (S'1 bis S'4) angeschlossen ist, sobald die Matrize sich in Richtung auf den feststehenden Maschinentisch um einen Wert gleich (D) versetzt hat, vor jeglichem Berühren des Maschinentisches (12) durch die Matrize (14), und dadurch, daß das erste und das zweite Betätigungselement (P, M) jeweils das Schließen eines ersten und eines zweiten Unterbrechers (I1, I2) steuern, wobei der erste Unterbrecher (I1), die Schalter (C1 bis C4) und ein elektrisches Steuerungssystem (R) der Druckaufbringungsmittel (22) in Reihe geschaltet sind auf die Eingangsklemmen (E1 bis E4) und die ersten Ausgangsklemmen (S1 bis S4) der Schaler, wobei ferner der zweite Unterbrecher (I2) zwischen die zweiten Ausgangsklemmen (S'1 bis S'4) jedes Schalters und die erste Ausgangsklemme (S4) eines letzten der in Reihe geschalteten Schalter so geschaltet ist, daß er die letzteren bei seinem Schließen nebenschließt, sobald einer der Schalter die zweite Position einnimmt.

4. Vorrichtung gemäß Anspruch 3, **dadurch gekennzeichnet,** daß sie vier Druckfedern (26) besitzt, welche in den Ecken eines durch die Matrize (14) gebildeten Rechtecks angeordnet sind, und daß sie vier Kontakte (42) besitzt, welche in der Nähe der vier Federn angeordnet sind.

5. Vorrichtung gemäß einem der Ansprüche 2 bis 4, **dadurch gekennzeichnet,** daß die Federn (26) Druckfedern sind, die in Hülsen (28) stecken, welche auf dem feststehenden Maschinentisch (12) befestigt sind, und deren unteres und oberes Ende gegen einen in der Höhe verstellbaren Anschlag (30) beziehungsweise gegen einen Schieber (34) abgestützt ist, auf dem die Matrize (14) ruht.

6. Vorrichtung gemäß Anspruch 5, **dadurch gekennzeichnet,** daß die Hülsen (28) mit einem hydraulischen Fluid gefüllt und Rillen (34a) auf den Stößeln (34) angebracht sind, um einen Dämpfer gegen die Bewegungen der Stößel zu bilden durch die Schicht des Fluids zwischen dem äußeren Durchmesser der Stößel und dem Bohrungsdurchmesser der Hülsen.

7. Vorrichtung gemäß einem der Ansprüche 1 bis 6, **ddurch gekennzeichnet,** daß eine Verkleidung (48) die Matrize (14) und den feststehenden Maschinentisch (12) umgibt.

8. Vorrichtung gemäß eines der Ansprüche 1 bis 7, **dadurch gekennzeichnet,** daß das erste Betätigungselement zumindest einen Bedienungsteil (M) enthält, der durch die Bedienungsperson mit beiden Händen gleichzeitig zu bedienen ist.

# FIG. 1

EP 0 318 366 B1

FIG. 2

FIG. 3